# EUROPEAN PATENT APPLICATION

(11) **EP 4 768 512 A1**
(43) Date of publication of application: **01.07.2026**
(21) Application number: 24856297.7
(22) Date of filing: 06.08.2024
(51) Int. Cl.: C08F 290/14, C08F 2/50, C09D 7/63, C09D 183/04

(54) **METHOD FOR CURING PHOTOCURABLE COMPOSITION THROUGH UV-LED IRRADIATION, AND METHOD FOR PRODUCING CURED PRODUCT OF SAID PHOTOCURABLE COMPOSITION**

(30) Priority: 24.08.2023 JP 2023136264
(71) Applicant: SHIN-ETSU CHEMICAL CO., LTD., Tokyo 100-0005 (JP)
(72) Inventor: TSUCHIDA Osamu, Annaka-shi, Gunma 379-0224 (JP); KAWAUCHI Hiroki, Annaka-shi, Gunma 379-0224 (JP)
(74) Representative: Ipsilon
(86) International application number: PCT/JP2024/028113
(87) International publication number: WO 2025/041606

(57) **Abstract**

[Object]

An object of the present invention is to provide a method for efficiently curing a photocurable silicone composition containing a (meth)acryloyl group by UV-LED irradiation.

[Solution]

A method for curing a photocurable composition by UV-LED irradiation, wherein the photocurable composition comprises
100 parts by mass of (A) an organopolysiloxane having at least two (meth)acryloyl groups per molecule,
0.5 to 30 parts by mass of (B) a compound other than an organo(poly)siloxane, having at least three (meth)acryloyl groups per molecule, and
1 to 15 parts by mass of (C) a photo-radical polymerization initiator.

## Description

### TECHNICAL FIELD

The present invention relates to a method for curing a composition cured by UV-LED irradiation, and a method for producing a cured film.

### BACKGROUND ART

A technique for curing a liquid resin composition by applying energy is a widely accepted technology used in many fields for forming coatings, molded products, and the like. Heat, ultraviolet light, and other forms of radiation are used as the energy required for curing. In thermal curing, a cured product is obtained by incorporating a thermally activatable catalyst into a base resin and applying heat. In radiation curing, a composition containing a photoinitiator that is activatable by ultraviolet light or other radiation is cured by irradiation with such radiation.

Examples of typical functional groups used for radiation curing include a (meth)acryloyl group, a mercapto group, and an epoxy group. The (meth)acryloyl group forms crosslinks through a radical polymerization reaction, and the mercapto group undergoes a thiol-ene reaction with an alkenyl group in the presence of radicals. The epoxy group undergoes cationic polymerization in the presence of an acid.

Various resins are used in such radiation curing, with silicone being one example thereof. Silicone is a general term for an organopolysiloxane having consecutive siloxane bonds as its backbone and organic groups such as methyl groups as side chains. Silicones have excellent heat resistance, cold resistance, chemical resistance, electrical insulation, releasability, and the like, and can be formed into various forms such as an oil form, a rubber form, and a resin form; and radiation-curing silicone is used as a raw material for cured products such as silicone rubber, silicone for release paper, and silicone for a hard coating.

Silicones containing a (meth)acryloyl group as a radiation-polymerizable group are used as release coatings, hard coatings, and surface tension modifiers. A photopolymerization initiator is incorporated into a base material, and a cured product is obtained by irradiating the base material with radiation while purging the interior of a chamber with nitrogen, thereby allowing radicals generated by the radiation to react efficiently.

Ultraviolet light is commonly used as the radiation, and the light source for the ultraviolet light is a mercury lamp, a metal halide lamp, or the like. For example, Patent Literature 1 discloses a technology in which a (meth)acryloyl group-containing silicone is coated onto a substrate and cured by UV irradiation, and describes a curing method using a mercury lamp.

Recently, UV-LED (ultraviolet light-emitting diode) lamps have been increasingly adopted as a new light source. Compared with mercury lamps and metal halide lamps, UV-LED lamps have advantages such as low power consumption, a long light source lifetime, and reduced effects of heat generated by the light source. For example, Patent Literature 2 describes an initiator suitable for curing using UV-LED light.

As described above in the Background Art, although UV-LEDs are gradually becoming more widespread, there remains room for improvement in that, due to their single-wavelength emission, the total energy output is lower than that of mercury lamps or metal halide lamps, and the energy of the emitted light is not sufficiently high.

### PRIOR LITERATURES

### PATENT LITERATURES

Patent Literature 1: Japanese National Phase Publication No. 2019-525976
Patent Literature 2: Japanese National Phase Publication No. 2020-524735

### SUMMARY OF THE INVENTION

### PROBLEM TO BE SOLVED BY THE INVENTION

As described above, Patent Literature 1 discloses a technology in which a (meth)acryloyl group-containing silicone is coated onto a substrate and cured using a mercury lamp. Curing using the latest UV-LEDs has a problem in that the energy output is low, making it difficult to apply the latest UV-LEDs to coating applications in which curing conditions are particularly demanding. The method described in Patent Literature 2 mentioned above is complex in that a new initiator must be designed and synthesized, and therefore requires a considerable amount of time to achieve practical use.

Another problem is that the primary wavelengths of UV-LED light are in the range of 365 to 405 nm, and the types of photo-radical polymerization initiators capable of generating radicals within this range are limited. In addition, when the base resin is a silicone, the initiator has lower compatibility with the resin than with other resins, making it necessary to select an appropriate initiator.

An object of the present invention is to provide a method for efficiently curing a photocurable silicone composition containing a (meth)acryloyl group by UV-LED irradiation.

### MEANS FOR SOLVING THE PROBLEMS

As a result of intensive research to achieve the aforementioned purpose, the inventor found that a (meth)acryloyl group-containing photocurable silicone composition can be efficiently cured with UV-LED light by adding a compound having at least three (meth)acryloyl groups per molecule to a photocurable composition containing an organopolysiloxane having at least two (meth)acryloyl groups per molecule and a photo-radical polymerization initiator, which led to the present invention.

That is, the present invention provides a method for curing a photocurable composition by UV-LED irradiation, wherein the photocurable composition comprises
100 parts by mass of (A) an organopolysiloxane having at least two (meth)acryloyl groups per molecule,
0.5 to 30 parts by mass of (B) a compound other than an organo(poly)siloxane, having at least three (meth)acryloyl groups per molecule, and
1 to 15 parts by mass of (C) a photo-radical polymerization initiator.

A photocurable composition comprising components (A) and (C) exhibits insufficient curability when irradiated with light of a relatively long wavelength; however, the curability is improved by adding component (B) to the composition prior to curing.

The method for curing the present invention preferably further comprises at least one constituent feature selected from the following items [1] to [7].
[1] The method, wherein component (A) is an organopolysiloxane represented by average composition formula (1): 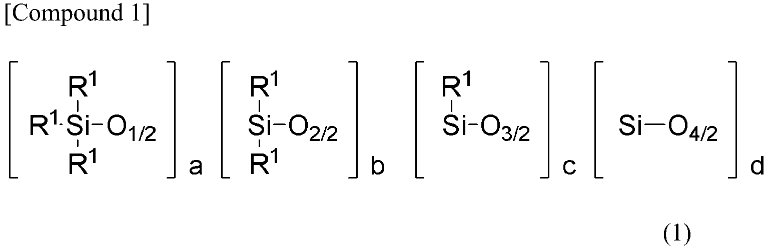 wherein R¹ is, independently of each other, a substituted or unsubstituted monovalent hydrocarbon group having 1 to 20 carbon atoms or a (meth)acryloyl group-containing organic group, at least two R¹s are a (meth)acryloyl group-containing organic group, "a" is a positive number of 2 or more, "b" is 0 or a positive number, "c" is 0 or a positive number, "d" is 0 or a positive number, and "a", "b", "c", and "d" satisfy an equation of 2 ≤ a + b + c + d ≤ 1,000.
[2] The method,
   wherein the number of silicon atoms having a (meth)acryloyl group-containing organic group is 1 to 30%, based on the total number of silicon atoms per molecule of the organopolysiloxane (A).
[3] The method, wherein component (B) has a (meth)acryloyl equivalent of 150 g/eq or less.
[4] The method, wherein component (C) is a compound having a maximum absorption wavelength in a wavelength range of 250 to 450 nm.
[5] The method, wherein component (C) is a compound having a maximum absorption wavelength in a wavelength range of 300 to 420 nm.
[6] The method, wherein light of the UV-LED irradiation is one or more types of light each having a peak emission wavelength in the range of 350 nm to 420 nm.
[7] The method, wherein the photocurable composition is a coating agent.

The present invention further provides a method for producing a cured film,
wherein the method comprises a step of curing a photocurable composition by UV-LED irradiation to obtain the cured film,
and wherein the photocurable composition comprises
100 parts by mass of (A) an organopolysiloxane having at least two (meth)acryloyl groups per molecule,
0.5 to 30 parts by mass of (B) a compound other than an organo(poly)siloxane, having at least three (meth)acryloyl groups per molecule, and
1 to 15 parts by mass of (C) a photo-radical polymerization initiator.

The production method of the present invention preferably further comprises at least one constituent feature selected from the following items [1] to [7].
[1] The method for producing a cured film, wherein component (A) is an organopolysiloxane represented by average composition formula (1): 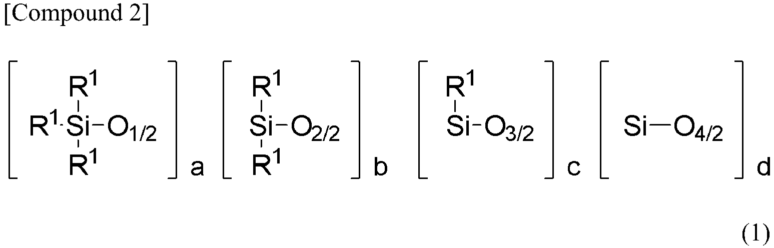 wherein R¹ is, independently of each other, a substituted or unsubstituted monovalent hydrocarbon group having 1 to 20 carbon atoms or a (meth)acryloyl group-containing organic group, at least two R¹s are a (meth)acryloyl group-containing organic group, "a" is a positive number of 2 or more, "b" is 0 or a positive number, "c" is 0 or a positive number, "d" is 0 or a positive number, and "a", "b", "c" and "d" satisfy an equation of 2 ≤ a + b + c + d ≤ 1,000.
[2] The method for producing a cured film, wherein the number of silicon atoms having a (meth)acryloyl group-containing organic group is 1 to 30%, based on the total number of silicon atoms per molecule of the organopolysiloxane (A).
[3] The method for producing a cured film, wherein component (B) has a (meth)acryloyl equivalent of 150 g/eq or less.
[4] The method for producing a cured film, wherein component (C) is a compound having a maximum absorption wavelength in a wavelength range of 250 to 450 nm.
[5] The method for producing a cured film, wherein component (C) is a compound having a maximum absorption wavelength in a wavelength range of 300 to 420 nm.
[6] The method for producing a cured film, wherein light of the UV-LED irradiation is one or more types of light each having a peak emission wavelength in the range of 350 nm to 420 nm.
[7] The method for producing a cured film, wherein the cured film is selected from the group consisting of a hard coating, a stain-proofing film, a water-repellent film, a mold release coating, a pressure-sensitive adhesive layer, and an adhesive layer.

The present invention further provides a UV-LED photocurable composition comprising
100 parts by mass of (A) an organopolysiloxane having at least two (meth)acryloyl groups per molecule,
0.5 to 30 parts by mass of (B) a compound other than an organo(poly)siloxane, having at least three (meth)acryloyl groups per molecule, and
1 to 15 parts by mass of (C) a photo-radical polymerization initiator that is a compound having a maximum absorption wavelength in a wavelength range of 250 to 450 nm.

The UV-LED photocurable composition of the present invention preferably further comprises at least one constituent feature selected from the following items [1] to [4].
[1] The UV-LED photocurable composition, wherein component (A) is an organopolysiloxane represented by average composition formula (1): 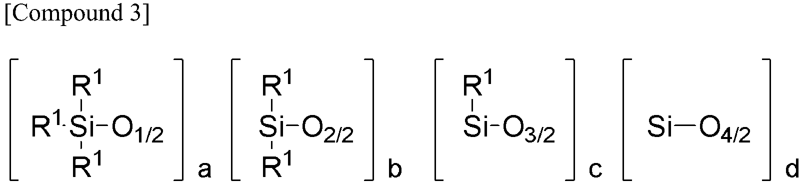 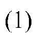 wherein R¹ is, independently of each other, a substituted or unsubstituted monovalent hydrocarbon group having 1 to 20 carbon atoms or a (meth)acryloyl group-containing organic group, at least two R¹s are a (meth)acryloyl group-containing organic group, "a" is a positive number of 2 or more, "b" is 0 or a positive number, "c" is 0 or a positive number, "d" is 0 or a positive number, and "a", "b", "c", and "d" satisfy an equation of 2 ≤ a + b + c + d ≤ 1,000.
[2] The UV-LED photocurable composition, wherein component (C) is a compound having a maximum absorption wavelength in a wavelength range of 300 to 420 nm.
[3] The UV-LED photocurable composition, wherein the UV-LED light is one or more types of light each having a peak emission wavelength in the range of 350 nm to 420 nm.
[4] The UV-LED photocurable composition, wherein component (C) is at least one selected from the group consisting of 2,2-dimethoxy-1,2-diphenylethan-1-one, 1-hydroxycyclohexylphenyl ketone, 2-hydroxy-1-{4-[4-(2-hydroxy-2-methylpropionyl)-benzyl]-phenyl}-2-methylpropan-1-one, methyl benzoylformate, 2-methyl-1-[4-(methylthio)phenyl]-2-morpholinopropan-1-one, 2-benzyl-2-dimethylamino-1-(4-morpholinophenyl)-1-butanone, 2-dimethylamino-2-(4-methyl-benzyl)-1-(4-morpholin-4-ylphenyl)-butan-1-one, bis(2,4,6-trimethylbenzoyl)-phenylphosphine oxide, 2,4,6-trimethylbenzoyl-diphenylphosphine oxide, ethyl(mesitylcarbonyl)phenylphosphine oxide, thioxanthone, 2-methylthioxanthone, 2-ethylthioxanthone, 2-chlorothioxanthone, 2-isopropylthioxanthone, 2,4-diethylthioxanthone, 1,2-octanedione, 1-[4-(phenylthio)phenyl-, 2-(O-benzoyloxime)], ethanone, 1-[9-ethyl-6-(2-methylbenzoyl)-9H-carbazol-3-yl]-, 1-(*O*-acetyloxime), and bis(η⁵-2,4-cyclopentadien-1-yl)bis[2,6-difluoro-3-(1H-pyrrol-1-yl)phenyl]titanium.

"UV-LED light" in the present invention means light that is irradiated from a light-emitting diode generating ultraviolet light, and has a peak wavelength in the range of 350 nm to 420 nm, particularly in a range of 365 nm to 405 nm. Preferably, "UV-LED light" is one or more types of ultraviolet light irradiated from an ultraviolet light-emitting diode with a peak emission wavelength of 365 nm, 385 nm, 395 nm, or 405 nm.

### EFFECTS OF THE INVENTION

According to the method of the present invention, a cured product is obtained by radical polymerization even with relatively low-energy UV-LED irradiation. Therefore, the method of the present invention provides a cured product having good curability and good adhesion to a substrate while consuming less energy than conventional curing methods using a mercury lamp, a metal halide lamp, or the like.

### MODE FOR CARRYING OUT THE INVENTION

The present invention will be explained in further detail below.

### Component (A)

Component (A) is an organopolysiloxane having at least two (meth)acryloyl groups per molecule. Preferably, component (A) is an organopolysiloxane having a (meth)acryloyl group represented by the following average composition formula (1): 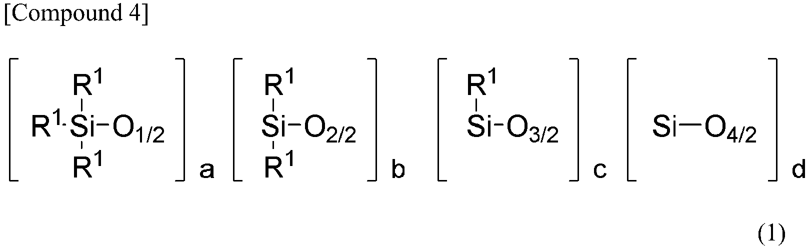 wherein R¹ is, independently of each other, a substituted or unsubstituted monovalent hydrocarbon group having 1 to 20 carbon atoms or a (meth)acryloyl group-containing organic group, at least two R¹s are a (meth)acryloyl group-containing organic group, "a" is a positive number of 2 or more, "b" is 0 or a positive number, "c" is 0 or a positive number, "d" is 0 or a positive number, and "a", "b", "c", and "d" satisfy an equation of 2 ≤ a + b + c + d ≤ 1,000.

In average composition formula (1), R¹ is, independently of each other, a substituted or unsubstituted monovalent hydrocarbon group having 1 to 20 carbon atoms, preferably 1 to 10 carbon atoms, or a (meth)acryloyl group-containing organic group. At least two R¹s are a (meth)acryloyl group-containing organic group. Examples of the monovalent hydrocarbon group include alkyl groups such as a methyl group, an ethyl group, a propyl group, and a butyl group; cycloalkyl groups such as a cyclohexyl group; and aryl groups such as a phenyl group and a tolyl group. A part or all of the hydrogen atoms of these groups may be substituted with one, two, or more selected from the group consisting of a halogen atom, a hydroxy group, a carboxyl group, a cyano group, an amino group, an epoxy group, a mercapto group, an alkoxy group, an alkenyl group, and a polyether group.

The (meth)acryloyl group-containing organic group is preferably a monovalent hydrocarbon group having 2 to 10 carbon atoms, more preferably 3 to 6 carbon atoms, with at least one (meth)acryloyloxy group, or a (poly)oxyalkylene alkyl group having 4 to 25 carbon atoms, more preferably 5 to 16 carbon atoms, with at least one (meth)acryloyloxy group. The (meth)acryloyl group-containing organic group is preferably a monovalent hydrocarbon group having 2 to 10 carbon atoms, more preferably 3 to 6 carbon atoms with one (meth)acryloyloxy group at a terminal, or a (poly)oxyalkylene alkyl group having 4 to 25 carbon atoms, more preferably 5 to 16 carbon atoms, with one (meth)acryloyloxy group at a terminal. An oxyethylene group and an oxyisopropylene group are preferred as the oxyalkylene group, and two or more oxyalkylene groups may be contained.

In formula (1), at least two R¹s are a (meth)acryloyl group-containing organic group. The bonding position of the (meth)acryloyl group-containing organic group is not particularly limited, and the (meth)acryloyl group-containing organic group may bond to the silicon atom of any of the R¹₃SiO_{1/2} unit, the R¹₂SiO_{2/2} unit, and the R¹SiO_{3/2} unit. Preferably, the (meth)acryloyl group-containing organic group is bonded to the silicon atom of the R¹₃SiO_{1/2} unit or the R¹₂SiO_{2/2} unit. Furthermore, it is preferred for the number of (meth)acryloyl group-containing organic groups bonded to one silicon atom to be one.

More preferably, at least two of a (meth)acryloyl group-containing siloxane unit represented by a RR³₂SiO_{1/2} unit or a RR³SiO_{2/2} unit is contained per molecule, in which R is a (meth)acryloyl group-containing organic group among the groups defined above as R¹, and R³ is a group other than a (meth)acryloyl group-containing organic group among the groups defined above as R¹.

The amount of the (meth)acryloyl group-containing organic group in component (A) is such that the number of silicon atoms having a (meth)acryloyl group-containing organic group is preferably 1 to 30%, more preferably 3 to 28%, even more preferably 5 to 25% based on the total number of silicon atoms per molecule of organopolysiloxane. If the amount is less than the lower limit, the curability may be insufficient; and if the amount is greater than the upper limit, cracks may occur in the cured product due to shrinkage when curing.

More preferably, the (meth)acryloyl group-containing organic group has the following structure.

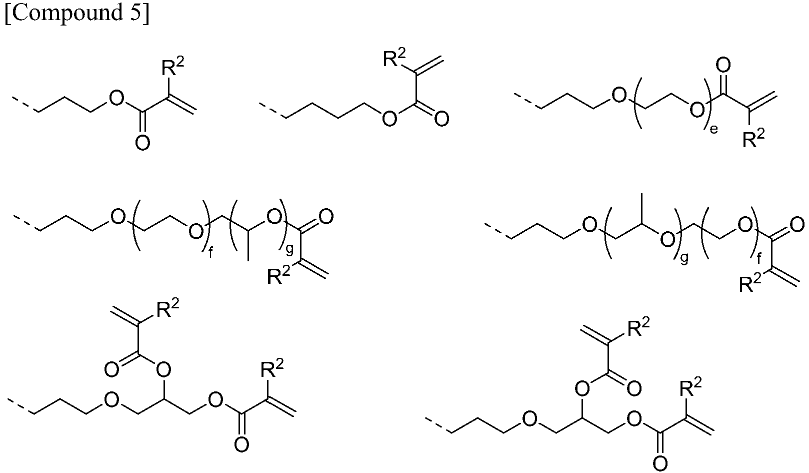

In the formula above, R² is a hydrogen atom or a methyl group. "e" is a positive number of 1 to 10, and "f" and "g" are, independently of each other, a positive number of 1 to 5. Preferably, "e" is a positive number of 1 to 7, and "f" and "g" are, independently of each other, a positive number of 1 to 3. More preferably, "e" is a positive number of 1 to 4, and "f" and "g" are, independently of each other, 1 or 2. In the above formula, the bonding sequence of ethylene oxide and propylene oxide shown in parentheses is not limited, and may be random or may form a block structure. In the formula, the broken line represents a bonding site with a silicon atom of the organopolysiloxane.

In average composition formula (1) above, "a" is a positive number of 2 or more, "b" is 0 or a positive number, "c" is 0 or a positive number, "d" is 0 or a positive number, and "a", "b", "c", and "d" satisfy an equation of 2 ≤ a + b + c + d ≤ 1,000. Preferably, "a" is a positive number of 2 to 6, and "b" is a positive number of 1 to 998, more preferably a positive number of 2 to 798. "c" is 0 to 4, and "d" is 0 to 2. The total number of siloxane units satisfies an equation of preferably 2 ≤ a + b + c + d ≤ 1,000, more preferably 2 ≤ a + b + c + d ≤ 800.

More preferably, a, b, c, and d are values such that the amount of the (meth)acryloyl group-containing organic group satisfies the aforementioned range, and the organopolysiloxane has a viscosity of 5 to 10,000 mPa·s, preferably a viscosity of 10 to 5,000 mPa·s, more preferably a viscosity of 20 to 1,000 mPa·s, at 25°C. If the viscosity of the organopolysiloxane is less than the lower limit or greater than the upper limit, the workability when producing the cured product may be poor. The viscosity of the organopolysiloxane is a value as measured with a BM-type rotational viscometer.

### Component (B)

Component (B) is a compound having at least three (meth)acryloyl groups per molecule. The compound serves as an additive that reduces the amount of energy required to obtain a cured product by LED irradiation, and simultaneously functions to improve adhesion of the cured product to a substrate. A composition containing only component (A) and component (C), which will be described below, exhibits insufficient curability upon curing with UV-LED light, and the adhesion of the resulting cured product to a substrate is also insufficient. In contrast, in the present invention, component (B) is incorporated into a composition containing component (A) and component (C), thereby improving curability upon curing with UV-LED light and improving adhesion of the resulting cured product to a substrate. Component (B) does not include an organo(poly)siloxane. The (meth)acryloyl group-containing compound is a trifunctional or higher-functional (meth)acrylate compound having at least three (meth)acryloyl groups per molecule, and preferably has 15 to 50 carbon atoms, more preferably 15 to 40 carbon atoms. The number of (meth)acryloyl groups in component (B) is preferably from 3 to 10 per molecule, more preferably from 3 to 8 per molecule, and even more preferably from 3 to 6 per molecule.

Component (B) is preferably a compound having a (meth)acryloyl equivalent of 150 g/eq or less, more preferably 120 g/eq or less, and even more preferably 100 g/eq or less. If the (meth)acryloyl equivalent of component (B) exceeds the above upper limit, the resulting photocurable composition may fail to exhibit sufficient curability and substrate adhesion.

Examples of component (B) include trimethylolpropane triacrylate, ethoxylated trimethylolpropane triacrylate, glycerol triacrylate, ethoxylated glycerol triacrylate, tris-(2-acryloxyethyl)isocyanurate, pentaerythritol triacrylate, ethoxylated pentaerythritol triacrylate, pentaerythritol tetraacrylate, ditrimethylolpropane tetraacrylate, and dipentaerythritol hexaacrylate. In view of viscosity and availability, trimethylolpropane triacrylate, glycerol triacrylate, pentaerythritol triacrylate, and pentaerythritol tetraacrylate are preferred.

One or more types of component (B) may be mixed.

The amount of component (B) is 0.5 to 30 parts by mass, preferably 0.8 to 25 parts by mass, more preferably 1 to 20 parts by mass, even more preferably 3 to 20 parts by mass, relative to 100 parts by mass of component (A). If the amount of component (B) is less than the above lower limit, the adhesion of the cured product to a substrate may be insufficient. Conversely, if the amount exceeds the above upper limit, problems such as the formation of cracks in the cured product due to curing shrinkage may occur.

### Component (C)

Component (C) is a photo-radical polymerization initiator. Component (C) is necessary to polymerize the (meth)acryloyl groups in component (A) and component (B) to obtain a cured product. Component (C) is preferably a compound having a maximum absorption wavelength in a wavelength range of 250 to 450 nm, more preferably a compound having a maximum absorption wavelength in a wavelength range of 300 to 420 nm. A compound having a maximum absorption wavelength in the aforesaid wavelength ranges is a compound capable of generating radicals upon absorption of ultraviolet light in those wavelength ranges. Typical UV-LEDs emit light having wavelengths in the range of 365 nm to 405 nm, and component (C) preferably functions in this wavelength range. In the method of the present invention, the light used for UV-LED irradiation is preferably one or more types of light each having a peak emission wavelength in the range of 350 nm to 420 nm, and particularly preferably one or more types of ultraviolet light each having a peak emission wavelength of 365 nm, 385 nm, 395 nm, or 405 nm. Component (C) is preferably a photo-radical polymerization initiator that functions in the above wavelength range. Whether a compound has a maximum absorption wavelength in the above wavelength range can be confirmed by measuring the wavelengths of light absorbed by the compound when the compound is irradiated with light in that wavelength range. Alternatively, whether a photo-radical polymerization initiator functions in the above wavelength range can be confirmed by using a UV-DSC device to evaluate exothermic and/or endothermic behavior observed when light in the wavelength range of 250 to 450 nm is irradiated onto the photo-radical polymerization initiator or a cured product thereof.

Examples of the photo-radical polymerization initiator include diethoxyacetophenone, 2-hydroxy-2-methyl-1-phenylpropan-1-one, 4'-isopropyl-2-hydroxy-2-methylpropiophenone, 2-hydroxymethyl-2-methylpropiophenone, 2-hydroxy-1-{4-[4-(2-hydroxy-2-methylpropionyl)-benzyl]-phenyl}-2-methylpropan-1-one, 2,2-dimethoxy-1,2-diphenylethan-1-one, 2-dimethylamino-2-(4-methyl-benzyl)-1-(4-morpholin-4-ylphenyl)-butan-1-one, 1-[4-(2-hydroxyethoxy)phenyl]-2-hydroxydi-2-methyl-1-propan-1-one, *p*-dimethylaminoacetophenone, *p*-tertiary butyl dichloroacetophenone, *p*-tertiary butyl trichloroacetophenone, *p-*azidobenzalacetophenone, 1-hydroxycyclohexylphenyl ketone, 2-methyl-1-[4-(methylthio)phenyl]-2-morpholinopropan-1-one, 2-benzyl-2-dimethylamino-1-(4-morpholinophenyl)-1-butanone, benzoin, benzoin methyl ether, benzoin ethyl ether, benzoin isopropyl ether, benzoin-n-butyl ether, benzoin isobutyl ether, methyl benzoylformate, benzyl, anisyl, bis(2,4,6-trimethylbenzoyl)-phenylphosphine oxide, 2,4,6-trimethylbenzoyl-diphenylphosphine oxide, ethyl(mesitylcarbonyl)phenylphosphine oxide, benzophenone, *o-*benzoylmethylbenzoate, Michler ketone, 4,4'-bisdiethylaminobenzophenone, 4,4'-dichlorobenzophenone, 4-benzoyl-4'-methyldiphenyl sulfide, thioxanthone, 2-methylthioxanthone, 2-ethylthioxantone, 2-chlorothioxanthone, 2-isopropylthioxanthone, 2,4-diethylthioxanthone, 1,2-octanedione, 1-[4-(phenylthio)phenyl-, 2-(*O*-benzoyloxime)], ethanone, 1-[9-ethyl-6-(2-methylbenzoyl)-9H-carbazol-3-yl]-, 1-(*O*-acetyloxime), and bis(η⁵-2,4-cyclopentadien-1-yl)bis[2,6-difluoro-3-(1H-pyrrol-1-yl)phenyl]titanium. One or more of these radical polymerization initiators can be added according to the desired functionality.

Particularly preferred examples of photo-radical polymerization initiators having a certain amount of UV absorption in the aforementioned wavelength range include 2,2-dimethoxy-1,2-diphenylethan-1-one, 1-hydroxycyclohexylphenyl ketone, 2-hydroxy-1-{4-[4-(2-hydroxy-2-methylpropionyl)-benzyl]-phenyl}-2-methylpropan-1-one, methyl benzoylformate, 2-methyl-1-[4-(methylthio)phenyl]-2-morpholinopropan-1-one, 2-benzyl-2-dimethylamino-1-(4-morpholinophenyl)-1-butanone, 2-dimethylamino-2-(4-methyl-benzyl)-1-(4-morpholin-4-ylphenyl)-butan-1-one, bis(2,4,6-trimethylbenzoyl)-phenylphosphine oxide, 2,4,6-trimethylbenzoyl-diphenylphosphine oxide, ethyl(mesitylcarbonyl)phenylphosphine oxide, thioxanthone, 2-methylthioxanthone, 2-ethylthioxantone, 2-chlorothioxanthone, 2-isopropylthioxanthone, 2,4-diethylthioxanthone, 1,2-octanedione, 1-[4-(phenylthio)phenyl-, 2-(*O*-benzoyloxime)], ethanone, 1-[9-ethyl-6-(2-methylbenzoyl)-9H-carbazol-3-yl]-, 1-(*O*-acetyloxime), and bis(η⁵-2,4-cyclopentadien-1-yl)bis[2,6-difluoro-3-(1H-pyrrol-1-yl)phenyl]titanium.

Furthermore, liquid photoradical polymerization initiators are preferred because they are more readily compatible with liquid compositions. Ethyl(mesitylcarbonyl)phenylphosphine oxide is particularly preferred.

The amount of component (C) is 1 to 15 parts by mass, preferably 2 to 13 parts by mass, more preferably 3 to 10 parts by mass, relative to 100 parts by mass of component (A). If the amount of component (C) is less than the above lower limit, curability may deteriorate; whereas if the amount exceeds the above upper limit, the cured product may exhibit unnecessary tackiness.

### Other components

In addition to components (A) to (C), an optional component may be added to the photocurable composition of the present invention as long as the effects of the present invention are maintained. Examples of such an optional component include an organopolysiloxane, a silicone oligomer, a silane compound, and other organic compounds that do not react with (meth)acryloyl groups of component (A) and component (B). Furthermore, from a functional standpoint, an anchor additive that improves adhesion with the substrate, a filler that increases the strength of the cured product, an antioxidant that increases the stability, or the like may be added. In addition, an antistatic agent, a lubricant, a leveling agent, a pigment, a dye, a phosphorescent material, a foaming agent, a plasticizer, a flame retardant, an antifoaming agent, or the like may be added.

The photocurable composition of the present invention may contain a solvent to adjust viscosity or improve leveling. Examples of the solvent include aromatic hydrocarbon solvents such as toluene and xylene; aliphatic hydrocarbon solvents such as hexane, heptane, octane, isooctane, decane, cyclohexane, methylcyclohexane, and isoparaffin; hydrocarbon solvents such as industrial gasoline, petroleum benzine, and solvent naphtha; ketone solvents such as acetone, methyl ethyl ketone, 2-pentanone, 3-pentanone, 2-hexanone, 2-heptanone, 4-heptanone, methyl isobutyl ketone, diisobutylketone, acetonylacetone, and cyclohexanone; ester solvents such as ethyl acetate, propyl acetate, isopropyl acetate, butyl acetate, and isobutyl acetate; ether solvents such as diethyl ether, dipropyl ether, diisopropyl ether, dibutyl ether, 1,2-dimethoxyethane, and 1,4-dioxane; solvents having ester and ether moieties such as 2-methoxyethyl acetate, 2-ethoxyethyl acetate, propylene glycol monomethyl ether acetate, and 2-butoxyethyl acetate; siloxane solvents such as hexamethyldisiloxane, octamethyltrisiloxane, octamethylcyclotetrasiloxane, decamethylcyclopentasiloxane, tris(trimethylsiloxy)methylsilane, tetrakis(trimethylsiloxy)silane; and mixed solvents thereof.

### Method for curing composition

The photocurable composition of the present invention is cured with ultraviolet light after being coated onto various substrates or filled into a mold for molding. The substrate used when forming a cured film by coating is not particularly limited, and various commonly used substrates may be employed, including, for example, glassine paper, clay-coated paper, high-quality paper, and polyethylene-laminated paper; plastic films such as polyester films, polystyrene films, polyethylene films, and polypropylene films; transparent resins such as polycarbonate; and metal foils such as aluminum foil. Furthermore, the coating amount of the composition is not particularly limited, but is generally about 0.01 to 50 g/m².

The photocurable composition of the present invention is mainly suited to forming a cured film by UV-LED irradiation. Commonly used UV-LEDs emit light having a single peak emission wavelength, and it is preferable to use one or more types of light having a peak emission wavelength in the range of 350 nm to 420 nm, particularly one or more types of light having a peak emission wavelength in the range of 365 nm to 405 nm. Preferably, one or more types of UV-LED light having peak emission wavelengths of 365 nm, 385 nm, 395 nm, and 405 nm are used. In the method of the present invention, UV-LED light having any wavelength may be used, and either a single type of UV-LED light or a combination of two or more types of UV-LED light may be used. Furthermore, although still under development and having relatively low output, there are UV-LEDs that emit light having a peak emission wavelength in a short wavelength range of 250 to 300 nm. Examples of such peak emission wavelengths include 265 nm and 280 nm, and such UV-LED light may be irradiated in combination with UV-LED light having the aforementioned wavelengths.

Normally, a UV-LED irradiation time of about 0.1 to 10 seconds at room temperature is sufficient. A longer irradiation time may be used without problem when the transmissivity of light is low or when the film thickness of the photocurable composition is large. If necessary, heating may be performed to apply thermal energy at a temperature from room temperature to 150°C for several seconds to several hours before and/or after the irradiation. In the method of the present invention, the irradiation energy (integrated light dose) of the UV-LED is preferably 50 mJ/cm² or more, more preferably 80 mJ/cm² or more. The photocurable composition of the present invention satisfactorily cures even under such a low irradiation energy and a short irradiation time. The upper limit of the irradiation energy (integrated light dose) of the UV-LED is not particularly limited, but is preferably 50,000 mJ/cm² or less, more preferably 20,000 mJ/cm² or less.

The photocurable composition of the present invention can be cured by UV irradiation in air; however, in order to improve curability, it is preferable to cure the photocurable composition under a reduced oxygen concentration. Since curability is improved as the oxygen concentration decreases, a lower oxygen concentration is preferred. The oxygen concentration is preferably 10,000 ppm or less, more preferably 1,000 ppm or less, and even more preferably 500 ppm or less.

A cured film obtained by curing a photocurable composition by the method of the present invention may be used as a hard coating, a stain-proofing film, a water-repellent film, a mold release coating, a pressure-sensitive adhesive, an adhesive, or the like, but is not limited to such cured films.

### EXAMPLES

The present invention will be explained in further detail below with reference to Examples and Comparative Examples, but the present invention is in no way limited by the following Examples. In the following chemical formulas, Me represents a methyl group.

### [Curability]

After preparing a photocurable composition by blending the respective components of the photocurable composition, the photocurable composition was coated onto polyethylene-laminated paper using a rubber roll at a coating amount of about 1.0 g/m². The coated composition was cured by irradiation with UV-LED light, thereby obtaining polyethylene-laminated paper having a cured film.

Curing with UV-LED light was carried out in a nitrogen atmosphere having an oxygen concentration of 100 to 150 ppm using a conveyor-type UV irradiation device manufactured by Eye Graphics Co., Ltd. and equipped with an LED light source having a wavelength of 365 nm. The conveyor speed was adjusted so that the irradiation energy at 365 nm for one conveyor pass was 100 mJ/cm². Polyethylene-laminated paper coated with the composition was passed through the conveyor, and the composition after UV irradiation was touched with a fingertip. The UV irradiation energy required for the uncured resin to no longer adhere to the finger was recorded. A larger required irradiation energy indicates that a larger amount of energy is required for curing and that the curability is lower.

### [Substrate Adhesion]

The cured film obtained by the above-described procedure was evaluated by rubbing the surface of the cured film back and forth ten times with a fingertip. Cured films from which no cured resin was detached were evaluated as "good (G)", and cured films from which the cured resin was detached were evaluated as "no good (NG)".

### Example 1

A photocurable composition was prepared by mixing 100 parts by mass of (A-1) an acryloyl group-containing polydimethylsiloxane represented by the following average composition formula (2) and having a viscosity of 480 mPa·s at 25°C, 5 parts by mass of (B-1) trimethylolpropane triacrylate having a (meth)acryloyl equivalent of 98.8 g/eq, and 5 parts by mass of (C-1) ethyl(mesitylcarbonyl)phenylphosphine oxide. Curability and adhesion to a substrate were evaluated using the photocurable composition.

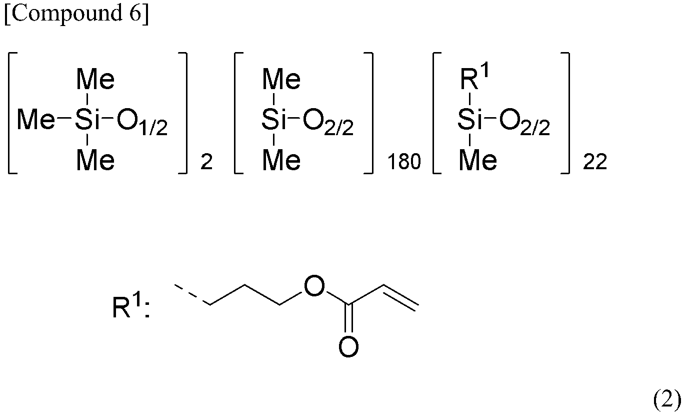

The number of silicon atoms having a (meth)acryloyl group-containing organic group, i.e., R¹, is 10.8%, based on the total number of silicon atoms per molecule.

### Example 2

The procedures of Example 1 were repeated except that the amount of the trimethylolpropane triacrylate (B-1) of Example 1 was set to 10 parts by mass, to thereby obtain a photocurable composition.

### Example 3

The procedures of Example 1 were repeated except that the amount of the trimethylolpropane triacrylate (B-1) of Example 1 was set to 3 parts by mass, to thereby obtain a photocurable composition.

### Example 4

The procedures of Example 1 were repeated except that the amount of the ethyl(mesitylcarbonyl)phenylphosphine oxide (C-1) of Example 1 was set to 10 parts by mass, to thereby obtain a photocurable composition.

### Example 5

The procedures of Example 1 were repeated except that component (A-1) of Example 1 was substituted with 100 parts by mass of (A-2) an acryloyl group-containing polydimethylsiloxane represented by the following average composition formula (3) and having a viscosity of 420 mPa·s at 25°C, to thereby obtain a photocurable composition.

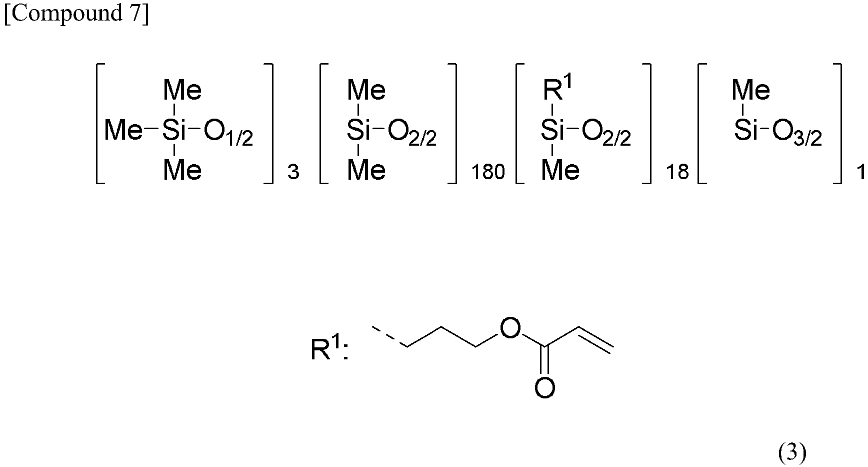

The number of silicon atoms having a (meth)acryloyl group-containing organic group, i.e., R¹, is 8.9%, based on the total number of silicon atoms per molecule.

### Example 6

The procedures of Example 1 were repeated except that component (A-1) of Example 1 was substituted with 100 parts by mass of (A-3) an acryloyl group-containing polydimethylsiloxane represented by the following average composition formula (4) and having a viscosity of 170 mPa·s at 25°C, to thereby obtain a photocurable composition.

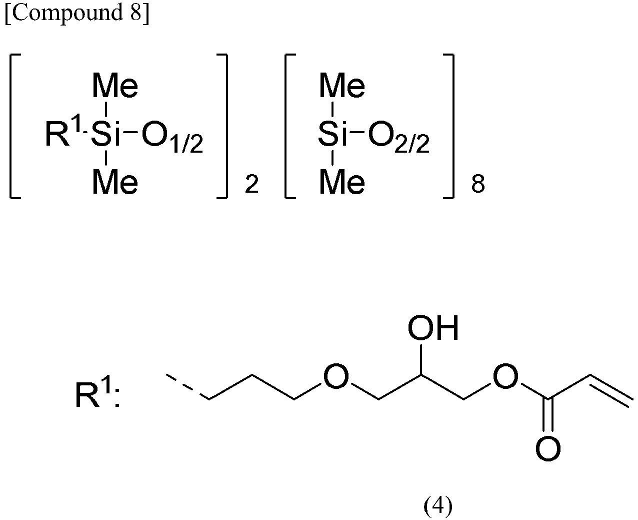

The number of silicon atoms having a (meth)acryloyl group-containing organic group, i.e., R¹, is 20.0%, based on the total number of silicon atoms per molecule.

### Example 7

The procedures of Example 1 were repeated except that component (B-1) of Example 1 was substituted with 5 parts by mass of (B-2) a mixture of pentaerythritol triacrylate having a (meth)acryloyl equivalent of 99.4 g/eq and pentaerythritol tetraacrylate having a (meth)acryloyl equivalent of 88.1 g/eq, with the mixture containing 80% or more of pentaerythritol triacrylate, to thereby obtain a photocurable composition.

### Example 8

The procedures of Example 1 were repeated except that the amount of the trimethylolpropane triacrylate (B-1) of Example 1 was set to 1 part by mass, to thereby obtain a photocurable composition.

### Comparative Example 1

The procedures of Example 1 were repeated except that component (B) of Example 1 was not contained, to thereby obtain a photocurable composition.

### Comparative Example 2

The procedures of Comparative Example 1 were repeated except that the amount of the ethyl(mesitylcarbonyl)phenylphosphine oxide (C-1) of Comparative Example 1 was set to 10 parts by mass, to thereby obtain a photocurable composition.

### Comparative Example 3

The procedures of Example 1 were repeated except that the amount of the trimethylolpropane triacrylate (B-1) of Example 1 was set to 0.1 parts by mass, to thereby obtain a photocurable composition.

### Comparative Example 4

The procedures of Example 1 were repeated except that the amount of the ethyl(mesitylcarbonyl)phenylphosphine oxide (C-1) of Example 1 was set to 0.1 parts by mass, to thereby obtain a photocurable composition.

### Comparative Example 5

The procedures of Example 1 were repeated except that component (B-1) of Example 1 was substituted with (b-3) 5 parts by mass of 1,6-hexanediol diacrylate, which is difunctional acrylate, having a (meth)acryloyl equivalent of 113.1 g/eq, to thereby obtain a photocurable composition.

**[Table 1]**

| | (A-1) | (A-2) | (A-3) | (B-1) | (B-2) | (B-3) | (C-1) | Curability, mJ/cm² | Substrate Adhesion |
|---|---|---|---|---|---|---|---|---|---|
| Example 1 | 100 | | | 5 | | | 5 | 200 | G |
| Example 2 | 100 | | | 10 | | | 5 | 200 | G |
| Example 3 | 100 | | | 3 | | | 5 | 200 | G |
| Example 4 | 100 | | | 5 | | | 10 | 100 | G |
| Example 5 | | 100 | | 5 | | | 5 | 200 | G |
| Example 6 | | | 100 | 5 | | | 5 | 200 | G |
| Example 7 | 100 | | | | 5 | | 5 | 200 | G |
| Example 8 | 100 | | | 1 | | | 5 | 300 | G |
| Comparative Example 1 | 100 | | | | | | 5 | 700 | NG |
| Comparative Example 2 | 100 | | | | | | 10 | 200 | NG |
| Comparative Example 3 | 100 | | | 0.1 | | | 5 | 300 | NG |
| Comparative Example 4 | 100 | | | 5 | | | 0.1 | >1,000 | NG |
| Comparative Example 5 | 100 | | | | | 5 | 5 | 200 | NG |

As shown in Table 1 above, the composition of Comparative Example 1, which did not contain component (B), was cured but exhibited poor curability and insufficient adhesion to a substrate. The composition of Comparative Example 2, which did not contain component (B) but contained an increased amount of component (C), showed improved curability due to the increased amount of component (C); however, substrate adhesion was not improved. Accordingly, it can be seen that component (B) is necessary to improve substrate adhesion. In Comparative Example 3, substrate adhesion deteriorated because the amount of component (B) was too small. In Comparative Example 4, the amount of component (C) was too small, resulting in poor curability and insufficient substrate adhesion. The composition of Comparative Example 5, which contained as component (B) a compound having two (meth)acryloyl groups per molecule, exhibited insufficient substrate adhesion.

In contrast, as shown in Examples 1 to 8 in Table 1 above, the photocurable compositions of the present invention containing component (B) each exhibited good curability and good adhesion to a substrate upon UV-LED irradiation. According to the method of the present invention, irradiation with light of a relatively long wavelength, such as UV-LED light, can be used to efficiently cure the composition, thereby providing a cured product with excellent substrate adhesion.

### INDUSTRIAL APPLICABILITY

The photocurable composition of the present invention is efficiently cured by radical polymerization to obtain a cured product even under UV-LED irradiation with relatively low irradiation energy. Compared with conventional curing methods using a mercury lamp, a metal halide lamp, or the like, the method of the present invention is more energy-efficient and provides a cured product having excellent curability and substrate adhesion. A cured film obtained by curing the photocurable composition by the method of the present invention is useful as a hard coating, a stain-proofing film, a water-repellent film, a mold release coating, a pressure-sensitive adhesive, an adhesive, or the like.

## Claims

1. A method for curing a photocurable composition by UV-LED irradiation, wherein the photocurable composition comprises
100 parts by mass of (A) an organopolysiloxane having at least two (meth)acryloyl groups per molecule,
0.5 to 30 parts by mass of (B) a compound other than an organo(poly)siloxane, having at least three (meth)acryloyl groups per molecule, and
1 to 15 parts by mass of (C) a photo-radical polymerization initiator.

2. The method according to claim 1, wherein component (A) is an organopolysiloxane represented by average composition formula (1): 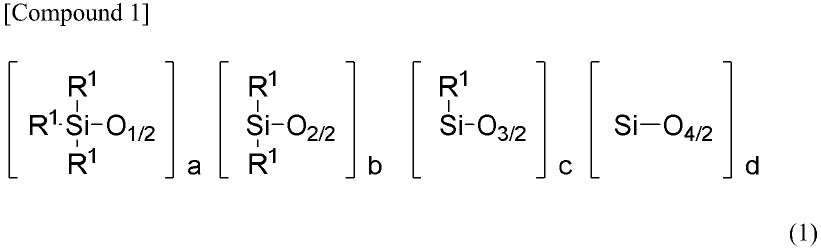 wherein R¹ is, independently of each other, a substituted or unsubstituted monovalent hydrocarbon group having 1 to 20 carbon atoms or a (meth)acryloyl group-containing organic group, at least two R¹s are a (meth)acryloyl group-containing organic group, "a" is a positive number of 2 or more, "b" is 0 or a positive number, "c" is 0 or a positive number, "d" is 0 or a positive number, and "a", "b", "c", and "d" satisfy an equation of 2 ≤ a + b + c + d ≤ 1,000.

3. The method according to claim 2, wherein the number of silicon atoms having a (meth)acryloyl group-containing organic group is 1 to 30%, based on the total number of silicon atoms per molecule of the organopolysiloxane (A).

4. The method according to claim 1, wherein component (B) has a (meth)acryloyl equivalent of 150 g/eq or less.

5. The method according to claim 1, wherein component (C) is a compound having a maximum absorption wavelength in a wavelength range of 250 to 450 nm.

6. The method according to claim 5, wherein component (C) is a compound having a maximum absorption wavelength in a wavelength range of 300 to 420 nm.

7. The method according to claim 1, wherein light of the UV-LED irradiation is one or more types of light each having a peak emission wavelength in the range of 350 nm to 420 nm.

8. The method according to any one of claims 1 to 7, wherein the photocurable composition is a coating agent.

9. A method for producing a cured film,
wherein the method comprises a step of curing a photocurable composition by UV-LED irradiation to obtain the cured film,
and wherein the photocurable composition comprises
100 parts by mass of (A) an organopolysiloxane having at least two (meth)acryloyl groups per molecule,
0.5 to 30 parts by mass of (B) a compound other than an organo(poly)siloxane, having at least three (meth)acryloyl groups per molecule, and
1 to 15 parts by mass of (C) a photo-radical polymerization initiator.

10. The method for producing the cured film according to claim 9, wherein component (A) is an organopolysiloxane represented by average composition formula (1): 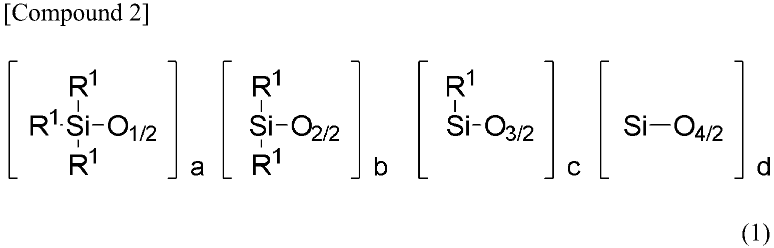 wherein R¹ is, independently of each other, a substituted or unsubstituted monovalent hydrocarbon group having 1 to 20 carbon atoms or a (meth)acryloyl group-containing organic group, at least two R¹s are a (meth)acryloyl group-containing organic group, "a" is a positive number of 2 or more, "b" is 0 or a positive number, "c" is 0 or a positive number, "d" is 0 or a positive number, and "a", "b", "c" and "d" satisfy an equation of 2 ≤ a + b + c + d ≤ 1,000.

11. The method for producing the cured film according to claim 10, wherein the number of silicon atoms having a (meth)acryloyl group-containing organic group is 1 to 30%, based on the total number of silicon atoms per molecule of the organopolysiloxane (A).

12. The method for producing the cured film according to claim 9, wherein component (B) has a (meth)acryloyl equivalent of 150 g/eq or less.

13. The method for producing the cured film according to claim 9, wherein component (C) is a compound having a maximum absorption wavelength in a wavelength range of 250 to 450 nm.

14. The method for producing the cured film according to claim 13, wherein component (C) is a compound having a maximum absorption wavelength in a wavelength range of 300 to 420 nm.

15. The method for producing the cured film according to claim 9, wherein light of the UV-LED irradiation is one or more types of light each having a peak emission wavelength in the range of 350 nm to 420 nm.

16. The method for producing the cured film according to any one of claims 9 to 15, wherein the cured film is selected from the group consisting of a hard coating, a stain-proofing film, a water-repellent film, a mold release coating, a pressure-sensitive adhesive layer, and an adhesive layer.

17. A UV-LED photocurable composition comprising
100 parts by mass of (A) an organopolysiloxane having at least two (meth)acryloyl groups per molecule,
0.5 to 30 parts by mass of (B) a compound other than an organo(poly)siloxane, having at least three (meth)acryloyl groups per molecule, and
1 to 15 parts by mass of (C) a photo-radical polymerization initiator that is a compound having a maximum absorption wavelength in a wavelength range of 250 to 450 nm.

18. The UV-LED photocurable composition according to claim 17, wherein component (A) is an organopolysiloxane represented by average composition formula (1): 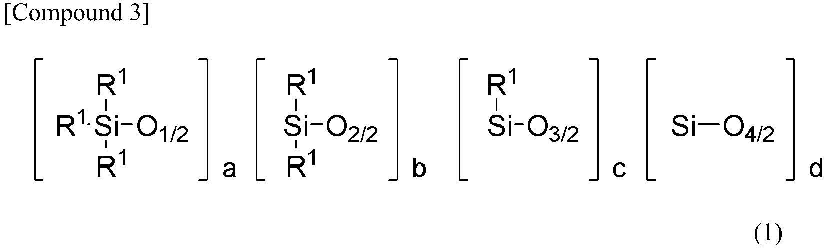 wherein R¹ is, independently of each other, a substituted or unsubstituted monovalent hydrocarbon group having 1 to 20 carbon atoms or a (meth)acryloyl group-containing organic group, at least two R¹s are a (meth)acryloyl group-containing organic group, "a" is a positive number of 2 or more, "b" is 0 or a positive number, "c" is 0 or a positive number, "d" is 0 or a positive number, and "a", "b", "c", and "d" satisfy an equation of 2 ≤ a + b + c + d ≤ 1,000.

19. The UV-LED photocurable composition according to claim 17, wherein component (C) is a compound having a maximum absorption wavelength in a wavelength range of 300 to 420 nm.

20. The UV-LED photocurable composition according to claim 17, wherein the UV-LED light is one or more types of light each having a peak emission wavelength in the range of 350 nm to 420 nm.

21. The UV-LED photocurable composition according to claim 17, wherein component (C) is at least one selected from the group consisting of 2,2-dimethoxy-1,2-diphenylethan-1-one, 1-hydroxycyclohexylphenyl ketone, 2-hydroxy-1-{4-[4-(2-hydroxy-2-methylpropionyl)-benzyl]-phenyl} -2-methylpropan-1-one, methyl benzoylformate, 2-methyl-1-[4-(methylthio)phenyl]-2-morpholinopropan-1-one, 2-benzyl-2-dimethylamino-1-(4-morpholinophenyl)-1-butanone, 2-dimethylamino-2-(4-methyl-benzyl)-1-(4-morpholin-4-ylphenyl)-butan-1-one, bis(2,4,6-trimethylbenzoyl)-phenylphosphine oxide, 2,4,6-trimethylbenzoyl-diphenylphosphine oxide, ethyl(mesitylcarbonyl)phenylphosphine oxide, thioxanthone, 2-methylthioxanthone, 2-ethylthioxanthone, 2-chlorothioxanthone, 2-isopropylthioxanthone, 2,4-diethylthioxanthone, 1,2-octanedione, 1-[4-(phenylthio)phenyl-, 2-(*O*-benzoyloxime)], ethanone, 1-[9-ethyl-6-(2-methylbenzoyl)-9H-carbazol-3-yl]-, 1-(*O*-acetyloxime), and bis(η⁵-2,4-cyclopentadien-1-yl)bis[2,6-difluoro-3-(1H-pyrrol-1-yl)phenyl]titanium.
